# EUROPEAN PATENT SPECIFICATION

(11) **EP 3 804 234 B1**
(45) Date of publication and mention of the grant of the patent: **11.12.2024**
(21) Application number: 19722010.6
(22) Date of filing: 23.04.2019
(51) Int. Cl.: H04L 51/58, H04L 51/56

(54) **DATA COMMUNICATION SYSTEM AND METHOD**
VERFAHREN UND SYSTEM FÜR DATENKOMMUNIKATION
SYSTÈME ET PROCÉDÉ DE COMMUNICATION DE DONNÉES

(30) Priority: 23.04.2018 GB 201806582; 07.05.2018 GB 201807450
(43) Date of publication of application: 14.04.2021
(73) Proprietor: Augnet Ltd., Virginia Water GU25 4SA (GB)
(72) Inventor: GILL, Daniel, Virginia Water GU25 4SA (GB)
(74) Representative: Basck Limited
(86) International application number: PCT/EP2019/060338
(87) International publication number: WO 2019/206889

(56) References cited:
- US-A1- 2011 141 974
- US-A1- 2013 310 088
- US-A1- 2017 013 428

## Description

### Technical Field

The present disclosure relates to data communication systems that, in operation, communicate short text messages, for example in a manner of short messaging services (SMS). Moreover, the present disclosure relates to methods of (for) operating aforementioned data communication systems, for example to communicate short text messages, for example in a manner of short messaging services (SMS). Furthermore, the present disclosure relates to computer program products comprising a non-transitory computer-readable storage medium having computer-readable instructions stored thereon, the computer-readable instructions being executable by a computerized device comprising processing hardware for executing aforementioned methods.

### Background

In overview, data communication systems that operate to communicate short text messages, for example short messaging services (SMS) communications, have been known for many years.

SMS is a text messaging service component of most telephones, the World Wide Web (WWW), and mobile device systems. The text messaging service uses standardized communication protocols to enable mobile devices to exchange short text messages. Software applications supporting SMS communication were the most widely used data applications ("*Apps*") recently, with an estimated 3.5 billion active users, or about 80% of all mobile subscribers, at the end of year 2010.

SMS, as used on modern communication devices, originated from radio telegraphy in radio memo pagers that used standardized phone protocols. These were defined in year 1985 as part of the Global System for Mobile Communications (GSM) series of standards. The protocols allowed users to send and receive messages of up to 160 alpha-numeric characters to and from GSM mobiles.

SMS is also contemporarily employed in mobile marketing, a type of direct marketing. According to one market research report, as of year 2014, the global SMS messaging business was estimated to be worth over $100 billion (USD), accounting for almost 50 percent of all the revenue generated by mobile messaging.

SMS messages are sent to a short message service center (SMSC), which provides a *"store and forward"* mechanism. It attempts to send messages to the SMSC's recipients. If a given recipient is not reachable, the SMSC queues the message for later retry to the given recipient. Some SMSCs also provide a *"forward and forget"* option where transmission is tried only once. Both mobile terminated (MT, for messages sent *to* a mobile handset) and mobile originating (MO, for those sent *from* the mobile handset) operations are supported. Message delivery is *"best effort",* so there are no guarantees that a given message will actually be delivered to its intended recipient but delay or complete loss of a message is uncommon, typically affecting less than 5 percent of messages. Some providers allow users to request delivery reports, either via the SMS settings of most modern phones, or by prefixing each message with *0# or *N#. However, the exact meaning of confirmations varies from reaching the network, to being queued for sending, to being sent, to receiving a confirmation of receipt from the target device, and users are often not informed of the specific type of success being reported.

Furthermore, SMS is a stateless communication protocol in which every SMS message is considered entirely independently of other messages.

Accordingly, enterprise applications using SMS as a communication channel for stateful dialogue (where an MO reply message is paired to a specific MT message) requires that session management be maintained external to the protocol.

Furthermore, transmission of short messages between the SMSC and a given handset is done whenever using the Mobile Application Part (MAP) of the SS7 protocol. The short messages are sent with the MAP MO- and MT-ForwardSM operations, whose payload length is limited by constraints of the signaling protocol to precisely 140 bytes (140 bytes * 8 bits / byte = 1120 bits). The short messages can be encoded using a variety of alphabets: the default GSM 7-bit alphabet, the 8-bit data alphabet, and the 16-bit UCS-2 alphabet. Depending on which alphabet a given subscriber has configured in his/her handset, this leads to the maximum individual short message sizes of 160 7-bit characters, 140 8-bit characters, or 70 16-bit characters. GSM 7-bit alphabet support is mandatory for GSM handsets and network elements, but characters in languages such as Hindi, Arabic, Chinese, Korean, Japanese, or Cyrillic alphabet languages (for example, Russian, Ukrainian, Serbian, Bulgarian, etc.) must be encoded using the 16-bit UCS-2 character encoding (see Unicode). Routing data and other metadata is additional to the payload size.

Larger content (concatenated SMS, multipart or segmented SMS, or *"long SMS")* can be sent using multiple messages, in which case each message will start with a User Data Header (UDH) containing segmentation information.

SMS gateway providers facilitate SMS traffic between businesses and mobile subscribers, including SMS for enterprises, content delivery, and entertainment services involving SMS, for example TV voting. Considering SMS messaging performance and cost, as well as the level of messaging services, SMS gateway providers can be classified as aggregators or SS7 providers.

The aggregator model is based on multiple agreements with mobile carriers to exchange two-way SMS traffic into and out of the operator's SMSC, also known as *"local termination model".* Aggregators lack direct access into the SS7 protocol, which is the protocol where the SMS messages are exchanged. SMS messages are delivered to the operator's SMSC, but not the subscriber's handset; the SMSC takes care of further handling of the message through the SS7 network.

Another type of SMS gateway provider is based on SS7 connectivity to route SMS messages, also known as *"international termination model".* The advantage of this model is an ability to route data directly through SS7, which gives a given provider total control and visibility of a complete path during SMS routing. This total control and visibility mean SMS messages can be sent directly to and from recipients without having to go through the SMSCs of other mobile operators. Therefore, it is possible to avoid delays and message losses, offering full delivery guarantees of messages and optimized routing. This model is particularly efficient when used in mission-critical messaging and SMS used in corporate communications. Moreover, these SMS gateway providers are providing branded SMS services with masking, but, after misuse of these gateways, most countries' Governments have taken serious steps to block these gateways.

Message Service Centers communicate with the Public Land Mobile Network (PLMN) or PSTN via Interworking and Gateway MSCs. Subscriber-originated messages are transported from a handset to a service centre, and may be destined for mobile users, subscribers on a fixed network, or Value-Added Service Providers (VASPs), also known as application-terminated. Subscriber-terminated messages are transported from the service center to the destination handset, and may originate from mobile users, from fixed network subscribers, or from other sources such as VASPs.

On some carriers, non-subscribers can send messages to a subscriber's phone using an Email-to-SMS gateway. Additionally, many carriers, including AT&T^{®} Mobility, T-Mobile USA, Sprint^{®}, and Verizon^{®} Wireless, offer the ability to do this through their respective web sites. Text-enabled fixed-line handsets are required to receive messages in text format. However, messages can be delivered to non-enabled phones using text-to-speech conversion.

SMS is also used for M2M (Machine-to-Machine) communication. For example, there is an LED display machine controlled by SMS, and some vehicle tracking companies use SMS for their data transport or telemetry needs. Short messages may be used normally to provide *premium rate services* to subscribers of a telephone network. Mobile-terminated short messages can be used to deliver digital content such as news alerts, financial information, logos, and ring tones.

Application-to-person (A2P) SMS is known. While SMS reached its popularity as a person-to-person messaging service, another type of SMS is growing fast: application-to-person (A2P) messaging services. A2P is a type of SMS sent from a subscriber to an application or sent from an application to a subscriber. It is commonly used by financial institutions, airlines, hotel booking sites, social networks, and other organizations sending SMS from their systems to their customers.

In the USA, A2P messages must be sent using a short code rather than a standard long code.

Next, conventional SMS delivery will be described. When the aforementioned SMSC determines it needs to attempt to deliver a Short Message to its intended destination, it will send the SMS-PP APDU containing the text message, a *"B-Party"* (destination phone number) and other details to the Gateway MSC (GMSC) logical component on the SMSC. The GMSC, on receipt of this Short Message, needs to discover the location of the B-Party in order to be able to correctly deliver the text to the recipient (the term Gateway MSC, in this context, indicating an MSC that is obtaining routing information from the Home Location Register (HLR)). To do this, the GMSC invokes the MAP service package MAP_SEND_ROUTING_INFO_FOR_SM, which sends a sendRoutingInfoForSM (SRI-for-SM) MAP message to the destination number's HLR, requesting their present location. This SRI-for-SM message may be sent to an HLR in the same network as the SMSC, or via an interconnect to an HLR in a foreign PLMN, depending on which network the destination subscriber belongs to.

The HLR performs a database lookup to retrieve the B-Party's current location, and returns it in an acknowledgement message to the SMSC's GMSC entity. The current location may be the MSC address the subscriber is currently roaming on, the SGSN address, or both. The HLR may also return a failure, if it considers the destination to be unavailable for short messaging; see the Failed Short Message delivery section as elucidated below.

Having obtained the routing information from the HLR, the GMSC will attempt to deliver the Short Message to its recipient. This is done by invoking the MAP_MT_FORWARD_SHORT_MESSAGE service, which sends a MAP mt-ForwardSM message to the address returned by the HLR, regardless of whether it is an MSC (Circuit Switched SMS delivery) or an SGSN (Packet Switched SMS delivery).

The VMSC will request the information needed for it to deliver the Short Message to its recipient by sending a Send_Info_for_MT_SMS message to the VLR. The VLR will then instigate a page request, or subscriber search, for the destination subscribers Mobile Subscriber ISDN Number (MSISDN), and return the result to the VMSC. Since a typical deployment sees the VLR being co-located with the MSC, this message flow is usually internal to the platform. Should the page or search for the subscriber fail, the VLR will indicate the failure cause to the VMSC, which will abort the Short Message delivery procedure and return the failure to the SMSC (see the Failed Short Message delivery as elucidated below). If the page of the handset were successful, the VMSC would then send to the SMSC indicating successful delivery. The GMSC component of the SMSC passes the result of the delivery attempt to the Service Centre. In the case of successful delivery, the delivered text message will be removed from the Store and Forward Engine (SFE) and, if requested, a delivery report sent to the text originator. If the delivery failed, the SMSC invokes a retry procedure to make periodically further attempts at delivery; additionally, it may register with the HLR to receive a notification when the B-Party becomes available for Short Message delivery in the future (see the Failed Short Message delivery as elucidated below).

Next, Failed Short Message delivery will be elucidated in greater detail. When the VMSC/SGSN indicates a Short Message delivery failure, the SMSC may send a message to the HLR, using the MAP_REPORT_SM_DELIVERY_STATUS procedure, indicating the reason for the delivery failure and requesting that the SMSC be put on a list of service centres wanting to be notified when the destination party becomes available again. The HLR will set a flag against the destination account, indicating that it is unavailable for short message delivery, and store the SMSC's address in the Message Waiting Data (MWD) list for the destination party. Valid flags are Mobile Not Reachable Flag (MNRF), Memory Capacity Exceeded Flag (MCEF) and Mobile Not Reachable for GPRS (MNRG). The HLR will now start responding to SRI-for-SM requests with a failure, indicating the failure reason, and will automatically add the requesting SMSC's address to the MWD list for the destination party. (However, if the SRI-for-SM message has priority flag set then the HLR will reply with VLR address if available).

The HLR may be informed of a subscriber becoming available for Short Message delivery in several ways:
(i) Where the subscriber has been detached from the network, a reattach will trigger a Location Update to the HLR.
(ii) Where the subscriber has been out of coverage, but not fully detached from the network, on coming back into coverage it will respond to page requests from the Visitor Location Register (VLR). The VLR will then send a Ready-for-SM (mobile present) message to the HLR.
(iii) Where the MS has had its memory full, and the subscriber deletes some texts, a Ready-for-SM (memory available) message is sent from the VMSC/VLR to the HLR.

Upon receipt of an indication that the destination party is now ready to receive short messages, the HLR sends an AlertSC MAP message to each of the SMSCs registered in the MWD list for the subscriber, causing the SMSC to start the Short Message delivery process again, from the beginning. Additionally, the SMSC will go into a retry schedule, attempting to deliver periodically the SM without getting an alert. The retry schedule interval will depend on the original failure cause - transient network failures will result in a short retry schedule, whereas out of coverage will typically result in a longer schedule.

Conventional SMS data communication is described in the foregoing; such an approach has remained relatively unchanged during the past 20 years. Such a manner of conventional SMS data communication suffers a technical problem of a lack of confirmation of successful SMS delivery to a defined given recipient device. In particular, there presently pertains a $70 billion (USD) SMS A2P industry that is technically functionally broken. There are tens of thousands of SMS wholesale providers seeking to provide SMS delivery services, for delivering SMS communications to recipient devices, for example for advertisement and campaigning purposes. Contemporarily employed metrics that are used to monitor a quality of SMS delivery to recipient devices are based solely on customer feedback which takes weeks to obtain and lacks clarity and focus. All technical metrics can be manipulated, so they cannot be relied upon. According to some estimates, around $8k (USD) profit per minute is being made by unscrupulous SMS providers, who intentionally "kill" in a range of 5% to 10% of their SMS traffic sent to them, but charge for 100% of the messages that they are supposed to process and deliver to intended recipients. These providers remain undetected because of a lack of adequate confirmation of successfully delivered communication to recipients. This is a technical problem that the present invention seek to address.

Presently, the SMS industry is worth $70 billion (USD) per year, and is growing around 7% year-on-year. Moreover, it is estimated that 500 billion SMS messages are communicated each month via telephone data communication networks. However, it is to be appreciated that such a growth is not from a person sending a conventional SMS message to another person, but so called A2P messaging, as aforementioned. Examples of such A2P, messaging include password resets, overdraft warnings users' bank, special offers from food suppliers (for example, Pizza Hut^{®}), messages confirming hairdresser's appointment, and so forth.

When a conventional SMS message is communicated via a data communication, it will be appreciated that there often a plurality of commercial companies, for example five different telecoms companies, involved in handling a given SMS message from a sender of the given SMS message to a recipient of the given SMS message. In practice, tracking communication progress of the SMS message is therefore very difficult to achieve. Contemporary examples will next be described, for which a complex conventional communication path for SMS messages causes operational problems.

An example transport service provider, for example potentially Uber^{®} company, contemporarily experiences a problem that whenever a given person downloads a software application ("App") of the transport service provider, the transport service provider asks that given person to confirm their mobile number. Thereafter, the transport service provider sends a verification code via SMS to that mobile number. For example, around 3 years ago, 100% of Uber's SMS communication traffic was handled by a company Twilio^{®}, but has since diminished to less than 100%. Uber^{®} expectations, as publicly reported, are that 92% of their verification messages lead to the Uber^{®} software application ("App") being activated. The reasons for there being less than 100% activation success can be attributed to some users deciding not to enter their codes to activate such an Uber^{®} functionality, or a worry that, potentially, some SMS messages are intentionally not being delivered by one or more SMS suppliers. Moreover, it will be appreciated that Twilio^{®} company has over 1000 SMS suppliers; there can be hundreds of routing changes every day to take advantage of exchange rate fluctuations when handling SMS delivery services, as well as communication market conditions. Such a situation is akin to high frequency trading on financial stock markets; the SMS suppliers will trade down to $0.0001 (USD) precision, for example. A problem is potentially encountered, in that once Twilio^{®} sends a given SMS to a provider, they receive no confirmation of whether or not the SMS was actually delivered, on account of a technical manner in which SMS communications are communicated and delivered to intended recipients.

In view of above, it will be appreciated that there are thousands of SMS providers presently in the World. A majority of the SMS providers are not mobile network operators, but a simple aggregator of SMS message traffic. There is an intention that with bulk traffic, better communication rates can be negotiated with such suppliers. However, many SMS carriers know that once a given SMS is on their network, visibility of what happens to it is lost. Some SMS carriers may potentially intentionally kill SMS messages, which is a reliability issue that is in practice a technical problem. Potentially, the SMS suppliers have no intention of delivering 100% of SMS traffic that is entrusted to them to deliver. Often, the SMS suppliers aim to achieve a 95% SMS message delivery success rate. The 5% of SMS messages that are killed, are still chargeable to their customers and it makes the SMS suppliers profit 100% margin (on the 5% they kill). A balance that is contemporarily adopted by many SMS suppliers is to kill as many messages as possible without getting complaints. SMS routes are inconsistent depending on how much revenue and profit the company has earned during a given month of operation. If business has been slow, the SMS suppliers may kill more SMS traffic to increase margins temporarily. In other words, a good provider one week, might not be a good provider another subsequent week; in other words, a technical problem is that contemporary SMS message delivery is faced with a reliability-of-delivery problem.

Document US 2011/141974 A1 discloses an electronic messaging and communication system for performing social networking-related operations, that has a server system making logged messages available to a user over a network connection using a mobile device.

Document US 2013/310088 A1 discloses a method for performing short message service delivery between user equipments, that involves sending a session initiation protocol message to a multimedia subsystem network and determining whether the destination user equipment is registered to the network.

### Summary

The present invention seeks to provide an improved data communication system according to independent claim 1 that, in operation, provides for SMS messaging in an auditable and traceable manner, namely to address the aforementioned reliability-of-delivery problem.

The present invention also seeks to provide an improved method according to independent claim 10 that, in operation, provides for SMS messaging in an auditable and traceable manner, namely to address the aforementioned reliability-of-delivery problem.

Finally, the present invention discloses a computer program product according to independent claim 14.

Additional aspects of the invention are described in the dependent claims.

The invention is of advantage in that using the secondary communication arrangement in tandem with the primary communication arrangement provides a convenient mechanism for auditing and confirming receipt of SMS messages at intended recipients of the SMS messages, because the primary communication arrangement does not itself provide functionality for achieving such an auditing mechanism.

### Description of the diagrams

The present disclosure will now be described, by way of example only, with reference to the following diagrams wherein:
- FIG. 1: is an illustration of a conventional data communication system that communicates conventional SMS messages to user devices in accordance with prior art:
- FIG. 2: is an illustration of a data communication system that functions in operation pursuant to the present disclosure;
- FIG. 3: is an illustration of steps of a method of (for) communicating SMS-type messages via the data communication system of FIG. 2; and
- FIG. 4: is a detailed illustration of an example data communication system that functions in operation pursuant to the present disclosure.

In the accompanying diagrams, an underlined number is employed to represent an item over which the underlined number is positioned or an item to which the underlined number is adjacent. When a number is non-underlined and accompanied by an associated arrow, the non-underlined number is used to identify a general item at which the arrow is pointing.

### DESCRIPTION

By *"an OEM-provided communication layer"* is meant a communication route or mechanism that is initially anticipated by an original equipment manufacturer (OEM) when designing a given communication device, for example when writing and/or configuring software embedded or embeddable within the given communication device; for example an OEM-provided communication layer is included as an integral part of a software operating system of the given device. For example, the OEM-provided communication layer is implemented, at least in part, using cloud computing services that are hosted spatially remotely from the given communication device.

Optionally, the primary communication arrangement is implemented, at least in part, using TCP/IP.

Optionally, a party responsible for delivering the SMS via the primary communication arrangement is not the same as a party that conveys the confirmation via the secondary communication arrangement for auditing and traceability purposes.

Optionally, the data communication system facilitates sending of a conventional short messaging service ("SMS") through TCP/IP to the given device. The SMS optionally originates from a communication device, which includes smartphones of individual users, or computing devices of one or more businesses.

Optionally, a signaling layer is a secure communication *"tunnel"* that is created across one or more communication nodes between a given device, and a communication device. The signaling layer is optionally defined by one or more communication protocols. The signaling layer optionally facilitates a transmission of the confirmation of a given signaling event from the given device to the communication device, in a secure manner, such as by encryption. Optionally, the "tunnel" uses of a handshaking process. Optionally, the handshaking process includes an exchange of encrypted data. Optionally, the encrypted data includes digital signatures of the one or more devices and/or software of the one or more devices.

The one or more communication nodes optionally include an active electronic device that is connected to the data communication system, and is capable of creating, receiving, or transmitting information over a communications channel of the data communication system. For example, the one or more communication nodes include modems, routers, switches and other network equipment.

Optionally, the secure communication *"tunnel"* is created by first authenticating the given device, the communication device, and the one or more communication nodes with a communication server. For example, a software service is installed on the communication server that authenticates the given device, the communication device, and one or more communication nodes on the communication server. Furthermore, the communication server makes use of one or more encryption protocols to make sure that the confirmation sent from the given device cannot be monitored/altered by external entities, and is optionally secure. Accordingly, the confirmation is transmitted securely through the secure communication *"tunnel".*

Furthermore, optionally, a software application is installed on one or more devices, for example akin to the given device, the communication device, and the one or more communication nodes. Any communication between the software application installed on one or more devices, the communication device, and the one or more communication nodes is performed using one or more protocols as defined the signaling layer.

Optionally, in the data communication system, the data communication system transcodes, when in operation, a conventional SMS communication of a conventional SMS message event into Internet^{®} Protocol (IP) data packets that are delivered to the given device, wherein receipt of the Internet^{®} Protocol (IP) data packets at the given device causes the given user device to send the confirmation as an acknowledgement of receipt of the Internet^{®} Protocol (IP) packets so that the execution of the given signaling event is auditable and traceable. More optionally, in the data communication system, transcoding the conventional SMS message includes changing a language and/or a protocol of the convention SMS message. For example, the language is related to a particular codec used for the SMS message. Furthermore, optionally, a protocol of the SMS message is changed to IPv4 protocol to obtain an IPv4 data packet or IPv6 data packet.

Optionally, transcoding the conventional SMS message includes changing a packet format of a conventional SMS message to an IP message packet format. For example, the packet format of the SMS message is changed to the IPv4 packet format.

For example, the packet format of the SMS message includes one or more SMS packet parameters such as a Service Centre Address information element (SCA), an Originator Address (OA), a Destination Address (DA), a Protocol Identifier (PID), a Data Coding Scheme (DCS), a Service Centre Time Stamp (SCTS), a Validity Period (VP), a User Data Length (UDL), and a User Data (UD). Furthermore, the SCA optionally defines a telephone number of a service center. The OA optionally defines an address of an originating SME. The DA optionally defines an address of the destination SME, and the PID is a parameter defining a manner of processing the SMS message, such as a FAX message, voice message, and so on. Furthermore, the DCS optionally identifies the coding scheme within a user data (UD), as specified by the user. The SCTS optionally identifies a time when an SMSC (such as an intermediary communication node) has received the message.

The VP optionally identifies the time from where the SMS message is no longer be valid in the SMSC. Furthermore, the UDL optionally indicates the length of the field where the user has entered the data of the SMS message, and the UD optionally defines the data or the content, such as a text, of the SMS message.

For example, one or more IP packet parameters in the packet format of IP packet includes a version field, an IP header length (IHL) field, a type-of-service field, a total length field, a flags field, a time-to-live field, a source address field a destination address field and an options field. The version field indicates a version of the IP packet used. The IHL field indicates how many 32-bit words are allowed to be included in the in the IP packet header. The type-of-service field specifies how a particular upper-layer protocol would handle the current datagram, and optionally allows datagrams to be assigned various levels of importance. The total length field specifies a length of the entire IP packet, including data and header, in bytes. The flags field that controls a packet is optionally fragmented, and indicates the parts of the IP packet to a receiver. The time-to-live field optionally maintains a counter that gradually decrements to zero, at which point the datagram is optionally discarded. The source address field specifies a sending communication node. The destination address field specifies a receiving communication node. The options field allows the IP packet to support various options, such as security.

Accordingly, transcoding optionally includes transforming one or more data/values corresponding to the one or more SMS parameters into the one or more data/values corresponding to the one or more IP packet parameters according to predefined rules. For example, data/value corresponding to the Validity Period (VP) parameter in the SMS packet are transformed into data/value corresponding to the time-to-live field of the IP packet. Alternatively, optionally, if the one or more parameters in the packet format of the SMS message do not correspond to one or more parameters in the packet format of the IP packet, the value of the one or more parameters in the packet format of the IP packet are set to a default value.

Optionally, in the data communication system, the conventional SMS communication is transcoded in operation via an application programming interface (API) or an operating system functionality hosted by the data communication system and/or the given device.

Optionally, in the data communication system, the conventional SMS communication is transcoded in operation via use of a centrally stored database, wherein the database has stored therein a list of accessible telephone numbers that are reachable by the one or more software applications for delivering the IP data packets of the transcoded SMS message to the given device.

For example, the one or more software applications for delivering the IP packets of the transcoded SMS message to the given device includes software applications such as Uber^{®}. The one or more software applications optionally require a user to provide an accessible telephone number, such as to receive a confirmation message to complete the registration.

More optionally, in the data communication system, an online application of the data communication system, in operation, receives the IP data packets generated by transcoding the conventional SMS communication, and delivers the IP data packets to a user-selected or default SMS application of the given device. For example, the user-selected or default SMS application of the given device includes iMessage^{®}, Hangouts^{®} and TrueMessenger^{®}.

Optionally, in the data communication system, the given device is implemented as a mobile wireless communication device (e.g. smart phone) which employs a background process to authenticate a messaging application programmable interface (API) executing as a cloud service in the data communication system, and wherein the application programmable interface sends, in operation, a telephone number or a device identification to a database for storing therein, wherein the database is hosted within the cloud service.

Optionally, the background process runs through one or more software applications installed on the given device. The one or more software applications optionally access the default, or user selected messaging software application installed on the given device, and determine the receipt of the transcoded SMS message.

More optionally, in the data communication system, a registration of the given device involves installing an APP (*"application", "App"*) that reads a device indication of the given device, wherein the device indication is then communicated within the data communication system using a push message, wherein the push message is used to communicate to the user of the given device that a given transcoded SMS message is available, wherein the given device receives the transcoded SMS message via use of the IP data packets and sends the confirmation that the transcoded SMS message has been delivered. Optionally, the aforesaid push message can be implemented as a push notification.

More optionally, the application installed on the given device to provide an indication about the receipt of the given transcoded SMS message monitors additional parameters, such as network connectivity. Furthermore, the application installed on the given device to provide an indication about the receipt of the given transcoded SMS are also optionally in contact with one or more online applications/nodes sending the transcoded SMS message through one or more IP data packets. Accordingly, if a transcoded SMS message is not received partially or completely due to a loss of one or more IP data packets due to high network latency, the application installed on the given device queries the one or more online applications/nodes sending the transcoded SMS message to resend the transcoded SMS message to the given device.

More optionally, in the data communication system, the APP also displays the transcoded SMS message to the user of the given device.

More optionally, in the data communication system, the transcoded SMS message is received by a plurality of APP or operating layers of the device, and delivery of the transcoded SMS message is confirmed to have occurred when at least one of the plurality of APP or operating layers of the device have delivered the transcoded SMS message to a user of the given device.

Optionally, the confirmation includes an indication of an associated mobile number of the given device at which one or more IP packets corresponding to a transcoded SMS have been received. Furthermore, the confirmation optionally includes an indication of a time at which the one or more IP packets corresponding to the transcoded SMS have been received at the given device. Furthermore, the confirmation optionally includes an identifier of the SMS message that has been transcoded, and transmitted to the given device. For example, if multiple IP packets corresponding to multiple transcoded SMS messages are sent to the given device, the confirmation of one or more of the multiple transcoded SMS messages includes the identifier related to a particular transcoded SMS message. Accordingly, the signaling event is beneficially auditable and traceable. Furthermore, the confirmation is optionally decrypted, audited and traced at the communication device, or the one or more communication nodes.

As aforementioned, by *"an OEM-provided communication layer"* is meant a communication route or mechanism that is initially anticipated by an original equipment manufacturer (OEM) when designing a given communication device, for example when writing and/or configuring software embedded or embeddable within the given communication device; for example OEM-provided communication layer is included as an integral part of a software operating system of the given communication device. For example, the OEM-provided communication layer is implemented, at least in part, using cloud computing services that are hosted spatially remotely from the given communication device.

Optionally, the method of (for) using the data communication system facilitates sending of conventional short messaging service ("SMS") through TCP/IP to the given device. The SMS optionally originates from a communication device, which includes smartphones of individual users, or computing devices of one or more businesses.

Optionally, the signaling layer is a secure communication *"tunnel"* that is created across one or more communication nodes between the given device, and the communication device. The signaling layer is optionally defined by one or more communication protocols. The signaling layer optionally facilitates transmission of the confirmation of the given signaling event from the given device to the communication device, in a secure manner, such as by encryption. The one or more communication nodes optionally include an active electronic device that is connected to the data communication system, and is capable of creating, receiving, or transmitting information over a communications channel of the data communication system. For example, the one or more communication nodes include modems, routers, switches and other network equipment.

Optionally, the secure communication *"tunnel"* is created by first authenticating the given device, the communication device, and the one or more communication nodes with a communication server. For example, a software application is optionally installed on the communication server that authenticates the given device, the communication device, and one or more communication nodes on the communication server. Furthermore, the communication server optionally makes use of one or more encryption protocols to make sure that the confirmation sent from the given device are not monitored/altered by external entities, and are secure. Accordingly, the confirmation is beneficially transmitted securely through the secure communication *"tunnel".*

Furthermore, optionally, a software application is installed on one or more devices akin to the given device, the communication device, and the one or more communication nodes. Any communication between the software application installed on one or more devices, the communication device, and the one or more communication nodes are optionally performed using one or more protocols as defined the signaling layer.

Optionally, the method includes arranging for the data communication system in operable to transcode a conventional SMS communication of a conventional SMS message event into Internet^{®} Protocol (IP) data packets that are delivered to the given device, wherein receipt of the Internet^{®} Protocol (IP) data packets at the given device causes the given user device to send the confirmation as an acknowledgement of receipt of the Internet^{®} Protocol (IP) packets so that the execution of the given signaling event is auditable and traceable. More optionally, in the method, transcoding the conventional SMS message includes changing a language and/or a protocol of the convention SMS message. For example, the language is related to a particular codec used for the SMS message. Furthermore, a protocol of the SMS message is optionally changed to IPv4 protocol to obtain an IPv4 or IPv6 data packet.

Optionally, the method includes transcoding the conventional SMS message by changing a packet format of a conventional SMS message to an IP message packet format. For example, the packet format of the SMS message is changed to the IPv4 or IPv6 packet format.

For example, the packet format of the SMS message includes one or more SMS packet parameters such as a Service Centre Address information element (SCA), an Originator Address (OA), a Destination Address (DA), a Protocol Identifier (PID), a Data Coding Scheme (DCS), a Service Centre Time Stamp (SCTS), a Validity Period (VP), a User Data Length (UDL), and a User Data (UD). Furthermore, the SCA optionally defines a telephone number of a service center. The OA optionally defines an address of an originating SME. The DA optionally defines an address of the destination SME, and the PID is optionally a parameter defining a manner of processing the SMS message, such as a FAX message, voice message, and so on. Furthermore, the DCS optionally identifies the coding scheme within a user data (UD), as specified by the user. The SCTS optionally identifies a time when an SMSC (such as an intermediary communication node) optionally has received the message. The VP optionally identifies the time from when the SMS message is no longer be valid in the SMSC. Furthermore, the UDL optionally indicates the length of the field where the user has entered the data of the SMS message, and the UD defines the data or the content, such as a text, of the SMS message.

For example, one or more IP packet parameters in the packet format of IP packet include a version field, an IP header length (IHL) field, a type-of-service field, a total length field, a flags field, a time-to-live field, a source address field, a destination address field and an options field. The version field optionally indicates a version of the IP packet used. The IHL field optionally indicates how many 32-bit words are in the IP packet header. The type-of-service field optionally specifies how a particular upper-layer protocol would handle the current datagram, and optionally allows datagrams to be assigned various levels of importance. The total length field optionally specifies a length of the entire IP packet, including data and header, in bytes. The flags field optionally controls, for example by indication, that a packet is fragmented, and optionally indicates the parts of the IP packet to a receiver. The time-to-live field optionally maintains a counter that gradually decrements to zero, at which point the datagram is optionally discarded. The source address field specifies a sending communication node. The destination address field specifies a receiving communication node. The options field allows the IP packet to support various options, such as security.

Accordingly, transcoding optionally includes transforming one or more data/values corresponding to the one or more SMS parameters into the one or more data/values corresponding to the one or more IP packet parameters according to predefined rules. For example, a data/value corresponding to the Validity Period (VP) parameter in the SMS packet is optionally transformed into a data/value corresponding to the time-to-live field of the IP packet. Alternatively, if the one or more parameters in the packet format of the SMS message do not correspond to one or more parameters in the packet format of the IP packet, the value of the one or more parameters in the packet format of the IP packet are optionally set to a default value.

Optionally, the method includes transcoding the conventional SMS communication in operation via an application programming interface (API) or an operating system functionality hosted by the data communication system and/or the given device.

Optionally, the method includes transcoding the conventional SMS communication in operation via use of a centrally stored database, wherein the database has stored therein a list of accessible telephone numbers that are reachable by the one or more software applications for delivering the IP data packets of the transcoded SMS message to the given device.

For example, the one or more software applications for delivering the IP packets of the transcoded SMS message to the given device includes software applications such as Uber^{®}. The one or more software applications optionally require a user to provide an accessible telephone number, such as to receive a confirmation message to complete the registration.

Optionally, the method includes arranging for an online application of the data communication system, in operation, to receive the IP data packets generated by transcoding the conventional SMS communication, and to deliver the IP data packets to a user-selected or default SMS application of the given device. For example, the user-selected or default SMS application of the given device includes iMessage^{®}, Hangouts^{®} and TrueMessenger^{®}.

Optionally, the method includes implementing the given device as a mobile wireless communication device (e.g. smart phone) which employs a background process to authenticate a messaging application programmable interface (API) executing as a cloud service in the data communication system, and wherein the method further includes arranging for the application programmable interface to send, in operation, a telephone number or a device identification to a database for storing therein, wherein the database is hosted within the cloud service.

Optionally, the background process runs through, namely is functional via use of, one or more software applications installed on the given device. The one or more software applications communicate via an API call, intent broadcast or some other approach to interface with the default, or user selected messaging software application installed on the given device, and determine the receipt of the transcoded SMS message.

Optionally, in the method, a registration of the given device involves installing an APP that reads a device indication of the given device, wherein the device indication is then communicated within the data communication system using a push message, wherein the push message is used to communicate to the user of the given device that a given transcoded SMS message is available, wherein the given device receives the transcoded SMS message via use of the IP data packets and sends the confirmation that the transcoded SMS message has been delivered.

More optionally, the application installed on the given device to provide an indication about the receipt of the given transcoded SMS message monitors additional parameters, such as network connectivity. Furthermore, the application installed on the given device to provide an indication about the receipt of the given transcoded SMS is optionally also in contact with one or more online applications/nodes sending the transcoded SMS message through one or more IP data packets. Accordingly, if a transcoded SMS message is not received partially or completely due to a loss of one or more IP data packets due to high network latency, the application installed on the given device optionally queries the one or more online applications/nodes sending the transcoded SMS message to resend the transcoded SMS message to the given device.

Optionally, in the method, the APP also displays the transcoded SMS message to the user of the given device.

Optionally, in the method, the transcoded SMS message is received by a plurality of APP or operating layers of the device, and delivery of the transcoded SMS message is confirmed to have occurred when at least one of the plurality of APP or operating layers of the device have delivered the transcoded SMS message to a user of the given device.

Optionally, the confirmation includes an indication of an associated mobile number of the given device at which one or more IP packets corresponding to a transcoded SMS have been received. Furthermore, the confirmation optionally includes an indication of a time at which the one or more IP packets corresponding to the transcoded SMS have been received at the given device. Furthermore, the confirmation optionally includes an identifier of the SMS message that has been transcoded, and transmitted to the given device. For example, if multiple IP packets corresponding to multiple transcoded SMS messages are sent to the given device, the confirmation of one or more of the multiple transcoded SMS messages includes the identifier related to a particular transcoded SMS message. Accordingly, the signaling event is beneficially auditable and traceable. Furthermore, the confirmation is optionally decrypted, audited and traced at the communication device, or the one or more communication nodes.

The present invention is susceptible to being implemented using a computer program product comprising a non-transitory computer-readable storage medium having computer-readable instructions stored thereon, the computer-readable instructions being executable by a computerized device comprising processing hardware to execute a method of the disclosure.

### DESCRIPTION OF DRAWINGS

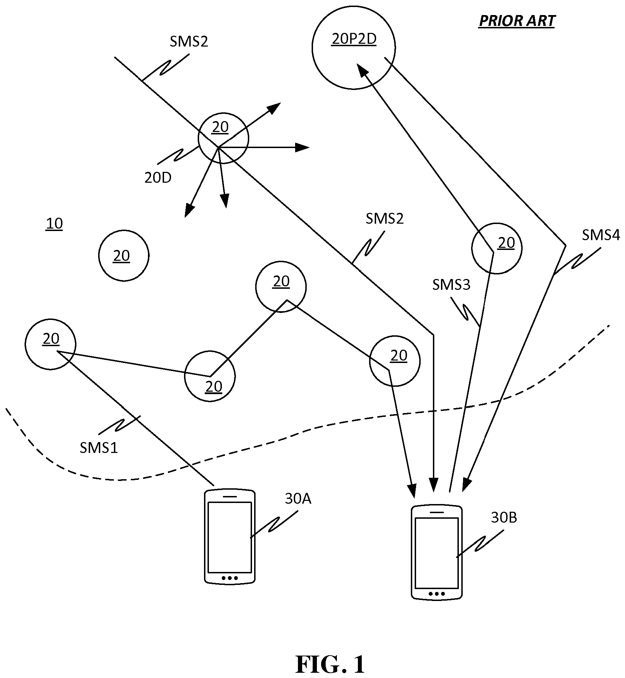

A conventional manner of SMS message communication is illustrated in FIG. 1. Mobile communication devices **30A, 30B** are coupled wirelessly to a data communication system **10.** The data communication system **10** includes a plurality of communication nodes **20** that are coupled to exchange data therebetween, when in operation.

In a conventional manner of sending an SMS message, a user of the mobile communication device **30A** types in a short text message that is communicated as an SMS message, referred to as "SMS1", via nodes **20** to the mobile communication device **30B;** no confirmation message is sent back from the mobile communication device **30B** to the mobile communication device **30A;** the nodes **20** merely make a "best attempt" to try to deliver the SMS1. Such a "best attempt", as aforementioned is not auditable, and also not verifiable.

In the data communication system **10** of FIG. 1, there are also SMS suppliers, for example associated with a node **20D** that provides a service to distribute an SMS message "SMS2" to various mobile communication devices **30A** and other such devices; from the node **20D,** the SMS2 message is supplied to the mobile communication device **30B;** no confirmation message is sent back from the mobile communication device **30B** to the node **20D,** so a customer of the service provided by the node **20D** cannot be certain that the node **20D** is successfully managing to deliver the SMS2 message (for example, an advertisement) successfully to the mobile communication device **30B** and other related types of communication devices coupled to the data communication system **10.** There is therefore a risk that an operator of the node **20D** takes payment from its customer, even despite not performing correctly to deliver the SMS2 message to communication devices coupled to the data communication system **10.**

Additionally, in the data communication system **10** of FIG. 1, the user of the mobile communication device **30B** sends an SMS message "SMS3" to a node **20P2D** that hosts a process P. The process P automatically generates, in response, an SMS message "SMS4" that is to be communicated back to the mobile communication device **30B.** However, on account of a lack of confirmation of receipt of the SMS message SMS4 at the mobile communication device **30B,** the process P is uncertain whether or not the SMS message SMS4 has been successfully received at the mobile communication device **30B.** Again, there is a lack of auditability of reliable SMS delivery in the data communication system **10.**

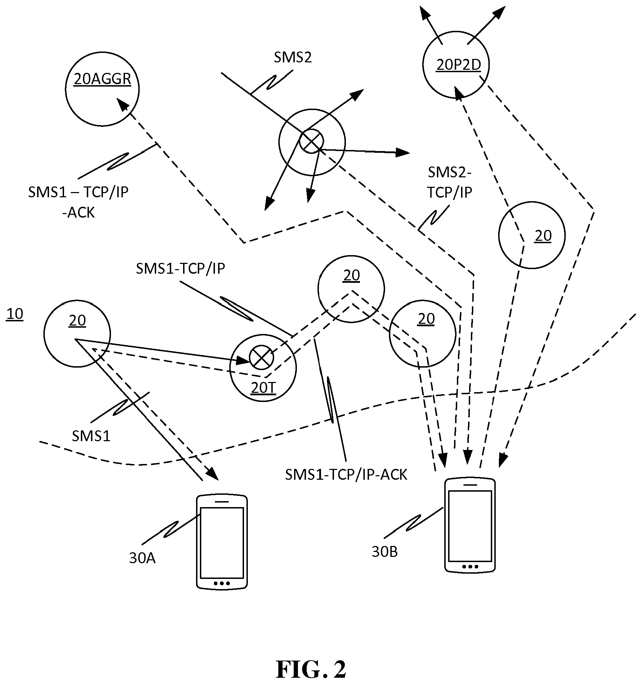

Referring next to FIG. 2, there is shown an illustration of the data communication system **10** operating pursuant to methods of the present disclosure. The mobile communication device **30A** sends the SMS communication SMS1 to a node **20** that passes SMS1 to a node **20T.** The node **20T** transcodes the SMS1 from a conventional SMS format to a TCP/IP format (for example, to a VoIP format, for example as used by Skype^{®}) to provide a TCP/IP equivalent message SMS1-TCP/IP. *"Transcoding"* in this context relates to a change of language and/or protocol of the message SMS1 to generate the TCP/IP equivalent message SMS1-TCP/IP; such transcoding is conveniently achieved using an API at the node **20T.** The TCP/IP equivalent message SMS1-TCP/IP is communicated via a plurality of nodes **20** to be received at the mobile communication device **30B,** in TCP/IP format. However, it will appreciate that TCP/IP allows an operating layer, software application or API hosted in the mobile communication device **30B** to generate a confirmation-of-receipt message SMS1-TCP/IP-ACK that is communicated back to the mobile communication device **30A,** confirming that the SMS message SMS1 has been received at the mobile communication device **30B.** It will be appreciated that such an operating layer for communicating such a confirmation-of-receipt message SMS1 - ACK back to the mobile communication device **30A** is optionally provided via a secondary communication arrangement, for example a secondary communication layer, provided by an original equipment manufacturer (OEM) associated with the mobile communication devices **30A, 30B.** The secondary communication layer is optionally implemented by TCP/IP, but can be alternatively implemented via a custom proprietary protocol, for example a custom proprietary protocol of an original equipment manufacturer (OEM).

For the node **20D** providing an SMS delivery service, the SMS message SMS2 is transcoded, for example as aforementioned, to an equivalent message SMS2 - TCP/IP that is delivered to the mobile communication device **30B** via use of TCP/IP protocol. The mobile communication device **30B** generates a confirmation message in TCP/IP format that is communicated back to, for example, a data aggregating node **20AGGR** that logs successfully received messages handled via the node **20D,** for example for financial auditing purposes to monitor a quality of SMS delivery service provided by the node **20D.** Optionally, as aforementioned, the confirmation message is additionally, or alternatively, communicated via an alternatively protocol to TCP/IP, for example via use of a proprietary OEM protocol.

In respect of process-to-device messaging, the mobile communication device **30B** transcodes therein an SMS message SMS3 to TCP/IP format as SMS3-TCP/IP and then communicates the message SMS3-TCP/IP via a node **20** to a process node **20P2D.** A process P executing at the process node **20P2D** sends back a message SMS4-TCP/IP in TCP/IP format via the node **20** to the mobile communication device **30B.** Optionally, the mobile communication device **30B** transcodes the message SMS4-TCP/IP to a convention SMS format within the mobile communication device **30B,** otherwise the received message SMS4-TCP/IP to a user of the mobile communication device **30B,** for display via a graphical user interface (GUI), for example. Optionally, the mobile communication device **30B** sends a confirmation SMS message in TCP/IP format back to the process node **20P2D** or elsewhere in the data communication system **10** of FIG. 2, for example to a performance result aggregating node. Optionally, as aforementioned, the confirmation message is additionally, or alternatively, communicated via an alternatively protocol to TCP/IP, for example via use of a proprietary OEM protocol.

Thus, essential features include:
(i) operating systems of the mobile communication devices **30A, 30B** and/or nodes of the data communication system **10** allow other apps to access an SMS app; and
(ii) operating systems or apps (such as Skype^{®}, Uber^{®} and so forth) allow running of an API query with them to check an accessibility of a mobile telephone number that has been verified on their respective platforms; the apps allow for embedded code therein, for example subject to verification of the embedded code.

Furthermore, by using a hybrid SMS & IP network, costs of delivering SMS-type short message is cheaper than any traditional SMS network (namely, cheaper than 100% of the presently established SMS industry, as aforementioned). However, it will be appreciated that a proprietary communication arrangement, for example included by original equipment manufacturers (OEM) in their communication devices, can be additionally, or alternatively, employed A network layer signaling event is employed that confirms that a given SMS-type message has been delivered. This is the only way to confirm when messages have been delivered to intended destination communication devices. There is thereby provided an SMS delivery service that is auditable and traceable, in contradistinction to conventional SMS as aforementioned with reference to FIG. 1.

When a traditional SMS is delivered, there is usually a signalling event that takes place (either a handset delivery report or a network delivery report). An issue is that these delivery reports can be generated by a carrier grade switch. Because anyone can generate a delivery report (even when the message has been killed), the trust in these reports is very low. It is conventionally impossible to verify which switch generated the delivery message (technical problem: falsification of conventional SMS delivery reports). In contradistinction, communication layers included by original equipment manufacturers (OEM's) are often proprietary in nature and difficult for hostile third parties to hack and falsifying data flowing therein. Use of OEM communication arrangements and layers allow for an enhanced degree of auditing reliability.

There is effective delivery of conventional SMS communications, wherein the transcoding takes out convention SMS communications from their SMS environment. When a given SMS message is sent to a given recipient device:
(i) a service pursuant to the present disclosure tries to locate a mobile communication device for which the given SMS is destined for; such locating is achieved by employing by using either of method 1 or method 2 as follows:
   Method 1: using an API: any Operating systems or APP's that have signed up to the service are contacted and a query run to ascertain whether or not a particular mobile number is reachable, that determine that required push notifications are active; or
   Method 2: a centrally stored database is maintained in the data communication system **10,** wherein the database has stored therein a list of accessible numbers that are reachable by various apps;
   Method 3: Operating systems or APP's that obtain a mobile phone number on registration of their service can register the mobile number in the data communication system **10,** wherein the database has stored therein a list of accessible numbers that are reachable by various apps.
(ii) assuming one of the methods 1 and 2 and 3 above return a positive affirmative result, the service then transcodes from the traditional SMS protocol/codec employ for the given SMS message, and into the required IP/data packets for communicating the given SMS message via TCP/IP protocol; and
(iii) the successful/online app will then covertly receive the data packets containing the given SMS, and deliver the data packets to the native SMS app on the device by converting the data packets into an SMS received data format compatible with native SMS applications, and communicating receipt of the data packets as receipt of an SMS. A native SMS client can also mean the preferred messaging client that the user has selected.

All of this (i) to (iii) happens without a receiving party knowing that an SMS has arrived via a different delivery method, namely is not aware of transcoding having been employed. Ideally, the transcoded given SMS presented on a user's communication device is available a plurality of times in several apps.

The present disclosure makes is possible to bypass SMS termination rates of conventional SMS delivery systems, and gain more data/intelligence as to the delivery of messages, for example for auditing purposes. Such data/intelligence is conveniently gained via use of an OEM communication arrangement/layer, as aforementioned.

A background process runs on a given user's smart phone which authenticates to a messaging API running as a cloud service. This background process sends in operation the user's phone number and their device id that is then stored in a database within the cloud.

The user's phone number and device id are stored in a database; no other identifying information is required. Such a manner of operation is desirable because there are less stringent regulations on privacy when personal details are not stored.

When a subscribing aggregator using this service wishes to send an SMS to a user, they call an API endpoint running in a cloud service. An aggregator then provides the message and the phone number to whom they wish to send the message.

The API looks up the phone number in a database and one of the following two scenarios then occurs:
1. Scenario 1: their number is found, thus the user has installed the APP and registered with the service. Based on this scenario, the following steps occur:
   (a) The Device ID is read from the record and is used to send a push message to the device using the secure communication *"tunnel"*
   (b) The device receives the push message to inform that a message is available. The background process wakes up, and makes an API call to a service to retrieve the message; this allows unlimited payloads rather than using the small payload of a push notification. When the device receives the message, it sends an acknowledgement and that message then gets marked as delivered;
   (c) The billing system records the transaction, which is then optionally used to invoice the subscriber of the service; and
   (d) The APP provides the message to the user within the default messaging client on the device; such a default is, for example, messaging client most often employed by the user, or a messaging client that is selected by the user.
2. Scenario 2: the number is not found, based on this scenario the following steps occur:
   (a) the message is sent via SMS utilizing an SMS provider; and
   (b) a record of the transaction is recorded so that the subscriber can be informed regarding which users are not using the service.
   (c) Optionally, the user can be sent an invite to register his/her device for the service, for future use.

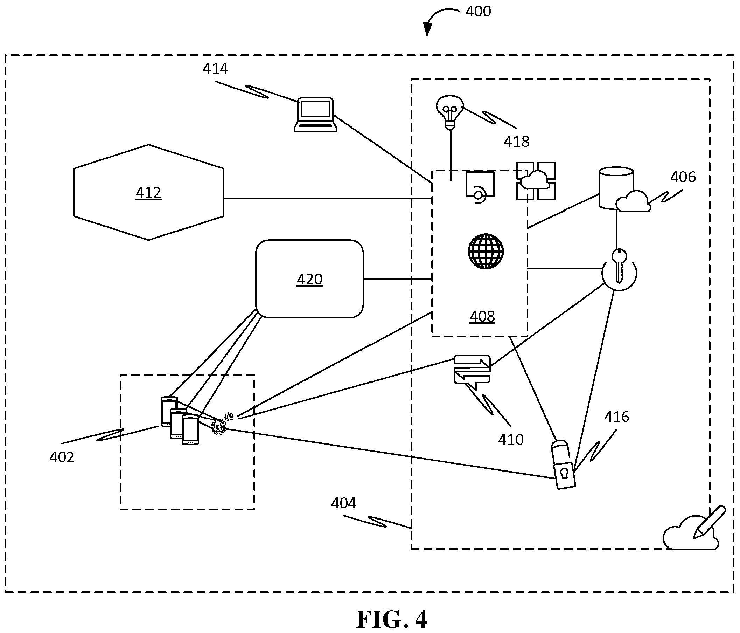

In FIG. 4, there is shown an illustration of a high level architecture of an embodiment of the present disclosure, namely a data communication system; the system breaks a direct link between the External Aggregator and the External SMS Provider, wherein those relationships are managed via an API, where the system decides which route the message will take.

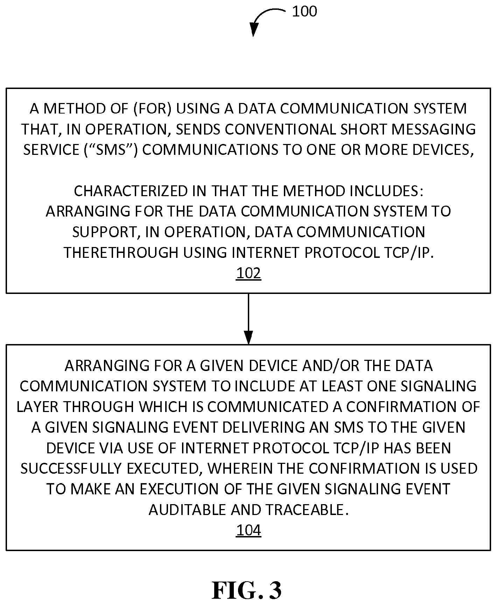

In FIG. 3, there are shown steps of a method of (for) operating a data communication system pursuant to the present disclosure; the method is indicated by **100.** The method **100** includes a first step **102** and a second step **104:**

| | |
|---|---|
| Step **102:** | this step concerns a method of (for) using a data communication system that, in operation, sends conventional short messaging service ("SMS") communications to one or more devices via a primary communication arrangement, for example TCP/IP protocol, |
| | characterized in that the method includes: |
| | (i) arranging for the data communication system to support, in operation, data communication therethrough using a secondary communication arrangement; and |
| Step **104:** | this step concerns (ii) arranging for a given device and/or the data communication system to include at least one signaling layer of the secondary communication arrangement through which is communicated a confirmation of a given signaling event delivering an SMS to the given device via use of the primary communication arrangement, has been successfully executed, wherein the confirmation, communicated via a secondary communication arrangement, is used to make an execution of the given signaling event auditable and traceable. |

Optionally, the steps **102** and **104** make use of an OEM communication arrangement of the one or more devices when making the given signaling event auditable and traceable. Optionally the OEM communication arrangement is employed as an alternative to Internet Protocol TCP/IP, or in addition thereto.

To prove the solution provided by the present disclosure, there is beneficially implemented as follows:
(i) a creation of a basic Android APP that is susceptible to being installed onto a test device using an APK. This APP runs in operation as a background service on a test device which authenticates to a messaging API;
(ii) by a modification of a Default Message APP to receive notification messages from a background process;
(iii) a creation of the message environment, including setting up key services such as Notification Hub^{®}, for example as illustrated in FIG. 4; and
(iv) a creation of a basic website including two web pages (namely, first and second web pages):
   (a) a first page is to be used to create and send a message; and
   (b) a second page is to be used to present transactions that have occurred.
(v) an integration with an external SMS provider:
   (a) if the message being sent is to a device with the APK downloaded and installed on then the message would be received as a notification via the client devices default messaging APP; and
   (b) if the message is not being sent to the test device the message would be sent as an SMS; thus proving the decision making process of the system.

FIG. 4 is a detailed illustration of an example data communication system **400** that functions in operation pursuant to present disclosure. Multiple mobile communication devices **402,** when in operation, are in communication with the data communication system **400.** The multiple mobile communication devices **402** optionally include a background process running on the multiple mobile communication devices **402,** such as through an installed software application. The background process optionally authenticates to a messaging API that is run as a cloud service. The cloud service beneficially runs through a cloud platform **404** where one or more applications are optionally built, and deployed.

The cloud service run on a proprietary Google^{®} platform. The background process optionally transmits one or more mobile numbers associated with the multiple mobile communication devices **402,** along with device identifiers of the multiple mobile communication devices **402,** such as IMEI numbers to the cloud platform **404.** Accordingly, the multiple mobile numbers and associated device identifiers may be stored on an online database **406,** such as an SQL database. Furthermore, the cloud platform **404** optionally hosts a website **408,** such as an HTML website. The website **408** beneficially facilitates transmission of one or more SMS messages to one or more mobile communication devices in the multiple mobile communication devices **402.** Furthermore, the website **408** and/or the cloud platform **404** optionally facilitates transcoding of the one or more SMS messages to IP data packets.

Furthermore, the one or more SMS messages are optionally transmitted to one or more mobile communication devices in the multiple mobile communication devices **402** through the software application installed on the multiple mobile communication devices **402.** The one or more SMS messages are beneficially received through a default, or user-selected messaging application installed on the multiple mobile communication devices **402,** such as Hangouts^{®}, iMessage^{®}, and so on.

Alternatively, if the software application is not installed on one or more of the multiple mobile communication devices **402,** the one or more SMS messages are not transcoded, and are optionally transmitted as regular SMS messages through an external SMS provider **420.**

Furthermore, the website **408** optionally includes a notification page. The multiple mobile communication devices **402,** after the receipt of the one or more SMS messages, optionally transmit a notification, including a confirmation of receipt of the one or more SMS messages. Accordingly, the notifications received from the multiple mobile communication devices **402** are beneficially stored on a notification hub **410.**

The cloud platform **404** is optionally used by an external aggregator **412** to transmit SMS messages to one or more mobile communication devices in the multiple mobile communication devices **402.** Accordingly, the one or more SMS messages are optionally transcoded, and transmitted to the one or more mobile communication devices in the multiple mobile communication devices **402,** the details of which may be retrieved from the online database 406 through multi-factor authentication **416.** Furthermore, one or more notifications, corresponding to the receipt of the one or more SMS messages are beneficially received from the multiple mobile communication devices **402,** and stored on the notification hub **410.** Optionally, the one or more notifications are communicated via at least one of: TCP/IP, an OEM communication arrangement. Optionally, TCP/IP and OEM communication arrangements are utilized in combination.

Furthermore, the data communication system **400** optionally includes an admin portal billing subscriber setup **414.** The admin portal billing subscriber setup **414,** when in operation, beneficially analyzes the number of SMS messages transmitted to the multiple mobile communication devices **402** against the number of notifications received from the mobile communication devices **402,** and beneficially therefrom generates a report about the number of SMS messages that have been successfully transmitted to the mobile communication devices **402,** and potentially thus allows the external aggregator **412** to charge accordingly for the delivered SMS messages.

Furthermore, the cloud platform **404** beneficially facilitates an analysis related to the transmission of the one or more SMS messages through application insights **418.** For example, the application insights **418** optionally analyze the number of one or more SMS messages transmitted, and the number of notifications received to and from the multiple mobile communication devices **402.** Furthermore, the application insights **418** optionally also facilitates maintenance of a record about one or more telephone numbers corresponding to the multiple mobile communication devices **402,** that is potentially unable to receive one or more transcoded SMS messages for future reference.

It will be appreciated that the data communication system **10** is capable of providing optional additional services. The mobile communication devices **30A, 30B** are provided with a proprietary SMS software application installed in data memory of the devices **30A, 30B,** wherein the software application provides a functionality of international roaming in association with providing SMS services; for example, the devices **30A, 30B** employ a given national service, for example Vodafone ^{®} UK services, that have separate SMS, voice and data roaming agreements within national telecommunication network operators; for example, a given user with the given national service travels to China and uses his/her device to send an SMS message using the given national service, wherein a first stage of communicating the SMS message occurs via a Chinese communication network, for example China Unicom's ^{®} network, and wherein an operator of the Chinese communication network will charge the given national service, for example Vodafone ^{®}. However, it will also be appreciated that the present disclosure assists the given user of the given national service to bypass or reduce international roaming charges, for example as when in China, as aforementioned; the present disclosure potentially provides an independent route to these conventional SMS providers. It will also be appreciated that the present disclosure allows for SMS messages to be encrypted and protected in a manner that would not usually be provided by a conventional SMS service operator.

Beneficially, therefore, the data communication system **10** allows an original communication network, for SMS communication purposes, to be bypassed, thereby saving costs when devices are used in a roaming mode in various national and regional jurisdictions.

## Claims

1. A data communication system (10) that, when in operation, sends
(102) conventional short messaging service, SMS, communications to one or more devices
(30A, 30B) via a primary communication arrangement, wherein
the data communication system (10) supports, in operation, data communication therethrough using (104) a secondary communication arrangement;
a given device and/or the data communication system (10) includes at least one signaling layer implemented via the secondary communication arrangement through which is communicated a confirmation of a given signalling event delivering an SMS to the given device via use of the primary communication arrangement has been successfully executed, wherein the confirmation is used to make an execution of the given signalling event auditable and traceable, wherein the secondary communication arrangement includes at least one of: Internet Protocol TCP/IP, an Original Equipment Manufacturer OEM communication layer; and
the data communication system (10) is operable to transcode a conventional SMS communication of a conventional SMS message event into Internet Protocol IP data packets that are delivered to the given device, wherein receipt of the Internet Protocol IP data packets at the given device causes the given user device to send the confirmation as an acknowledgement of receipt of the Internet Protocol IP packets so that the execution of the given signaling event is auditable and traceable **characterized in that** the transcoding the conventional SMS message includes changing a language and/or a protocol of the conventional SMS message,
wherein the confirmation of receipt of transcoded SMS message is provided by an application APP installed in the given device, wherein the application APP is in contact with one or more applications and queries the one or more applications for sending the transcoded SMS message to the given device,
wherein, the signalling layer is configured to facilitate a transmission of the confirmation of a given signalling event by exchanging encrypted data between the one or more devices, the encrypted data comprising digital signatures of the one or more devices and software of the one or more devices.

2. A data communication system (10) of claim 1, **characterized in that** a party responsible for delivering the SMS via the primary communication arrangement to the given device is not the same as a party that conveys the confirmation via the secondary communication arrangement for auditing and traceability purposes.

3. A data communication system (10) of claim 1, **characterized in that** the conventional SMS communication is transcoded in operation via an application programming interface API or an operating system functionality hosted by the data communication system (10) and/or the given device.

4. A data communication system (10) of claim 1, **characterized in that** the conventional SMS communication is transcoded in operation via use of a centrally stored database, wherein the database has stored therein a list of accessible telephone numbers that are reachable by the one or more software applications for delivering the IP data packets of the transcoded SMS message to the given device.

5. A data communication system (10) of claim 3 or 4, **characterized in that** an online application of the data communication system (10), in operation, receives the IP data packets generated by transcoding the conventional SMS communication, and delivers the IP data packets to a user-selected or default SMS application of the given device.

6. A data communication system (10) of claim 1, **characterized in that** the given device is implemented as a mobile wireless communication device (30A, 30B), e.g. smart phone which employs a background process to authenticate a messaging application programmable interface API executing as a cloud service in the data communication system (10), and wherein the application programmable interface sends, in operation, a telephone number or a device identification to a database for storing therein, wherein the database is hosted within the cloud service.

7. A data communication system (10) of claim 6, **characterized in that** a registration of the given device involves installing an APP that reads a device indication of the given device, wherein the device indication is then communicated within the data communication system (10) using a push message, wherein the push message is used to communicate to the user of the given device that a given transcoded SMS message is available, wherein the given device receives the transcoded SMS message via use of the IP data packets and sends the confirmation that the transcoded SMS message has been delivered.

8. A data communication system (10) of claim 7, **characterized in that** the APP also displays the transcoded SMS message to the user of the given device.

9. A data communication system (10) of claim 7, **characterized in that** the transcoded SMS message is received by a plurality of APP or operating layers of the device, and delivery of the transcoded SMS message is confirmed to have occurred when at least one of the plurality of APP or operating layers of the device have delivered the transcoded SMS message to a user of the given device.

10. A method (100) of using a data communication system (10) that, in operation, sends (102) conventional short messaging service, SMS; communications via a primary communication arrangement to one or more devices (30A, 30B), wherein method includes:
(i) arranging for the data communication system (10) to support, in operation, data communication therethrough using (104) a secondary communication arrangement;
(ii) arranging for a given device and/or the data communication system (10) to include at least one signalling layer using the secondary communication arrangement through which is communicated a confirmation of a given signalling event delivering an SMS to the given device via use of the primary communication arrangement has been successfully executed, wherein the confirmation is used to make an execution of the given signaling event auditable and traceable, wherein the secondary communication arrangement includes at least one of: Internet Protocol TCP/IP, an Original Equipment Manufacturer OEM communication layer; and
(iii) arranging for the data communication system (10) in operable to transcode a conventional SMS communication of a conventional SMS message event into Internet Protocol IP data packets that are delivered to the given device, wherein receipt of the Internet Protocol IP data packets at the given device causes the given user device to send the confirmation as an acknowledgement of receipt of the Internet Protocol IP packets so that the execution of the given signaling event is auditable and traceable **characterized in that** transcoding the conventional SMS message includes changing a language and/or a protocol of the conventional SMS message,
wherein the confirmation of receipt of transcoded SMS message is provided by an application APP installed in the given device, wherein the application APP is in contact with one or more applications and queries the one or more applications for sending the transcoded SMS message to the given device,
wherein, the signalling layer is configured to facilitate a transmission of the confirmation of a given signalling event by exchanging encrypted data between the one or more devices, the encrypted data comprising digital signatures of the one or more devices and software of the one or more devices.

11. A method (100) of claim 10, **characterized in that** the method includes transcoding the conventional SMS communication in operation via an application programming interface API or an operating system functionality hosted by the data communication system (10) and/or the given device.

12. A method (100) of claim 10, **characterized in that** the method includes transcoding the conventional SMS communication in operation via use of a centrally stored database, wherein the database has stored therein a list of accessible telephone numbers that are reachable by the one or more software applications for delivering the IP data packets of the transcoded SMS message to the given device.

13. A method (100) of claim 10, 11 or 12, **characterized in that** the method includes arranging for an online application of the data communication system (10), in operation, to receive the IP data packets generated by transcoding the conventional SMS communication, and to deliver the IP data packets to a user-selected or default SMS application of the given device.

14. A computer program product comprising a non-transitory computer readable storage medium having computer-readable instructions stored thereon, the computer-readable instructions being executable by a computerized device comprising processing hardware to execute a method as claimed in any one of claims 10 to 13.

## Patentansprüche

1. Datenkommunikationssystem (10), das, wenn in Betrieb, herkömmliche Kurznachrichtendienst-Kommunikationen, SMS-Kommunikationen, an eine oder mehrere Vorrichtungen (30A, 30B) über eine primäre Kommunikationsanordnung sendet (102), wobei
das Datenkommunikationssystem (10), in Betrieb, eine Datenkommunikation dahindurch unterstützt, die eine sekundäre Kommunikationsanordnung verwendet (104);
eine gegebene Vorrichtung und/oder das Datenkommunikationssystem (10) mindestens eine Signalisierungsschicht einschließt, die über die sekundäre Kommunikationsanordnung implementiert wird, durch die eine Bestätigung eines gegebenen Signalisierungsereignisses kommuniziert wird, dass das Übermitteln einer SMS an die gegebene Vorrichtung über das Verwenden der primären Kommunikationsanordnung erfolgreich ausgeführt wurde, wobei die Bestätigung verwendet wird, um eine Ausführung des gegebenen Signalisierungsereignisses überwachbar und rückverfolgbar zu machen, wobei die sekundäre Kommunikationsanordnung mindestens eines einschließt von: Internetprotokoll TCP/IP, einer Erstausrüster-Kommunikationsschicht, OEM-Kommunikationsschicht; und
das Datenkommunikationssystem (10) betriebsfähig ist, um eine herkömmliche SMS-Kommunikation eines herkömmlichen SMS-Nachrichtenereignisses in Internetprotokoll-Datenpakete, IP-Datenpakete, zu transcodieren, die an die gegebene Vorrichtung übermittelt werden, wobei ein Empfang der Internetprotokoll-Datenpakete, IP-Datenpakete, an der gegebenen Vorrichtung bewirkt, dass die gegebene Benutzervorrichtung die Bestätigung als eine Quittung des Empfangs der Internetprotokoll-Pakete, IP-Pakete, sendet, sodass die Ausführung des gegebenen Signalisierungsereignisses überwachbar und rückverfolgbar ist, **dadurch gekennzeichnet, dass** das Transcodieren der herkömmlichen SMS-Nachricht ein Ändern einer Sprache und/oder eines Protokolls der herkömmlichen SMS-Nachricht einschließt, wobei die Bestätigung des Empfangs einer transcodierten SMS-Nachricht durch eine Anwendung APP bereitgestellt wird, die in der gegebenen Vorrichtung installiert ist, wobei die Anwendung APP mit einer oder mehreren Anwendungen in Kontakt steht und die eine oder die mehreren Anwendungen zum Senden der transcodierten SMS-Nachricht an die gegebene Vorrichtung abfragt, wobei die Signalisierungsschicht konfiguriert ist, um eine Übersendung der Bestätigung eines gegebenen Signalisierungsereignisses durch Austauschen verschlüsselter Daten zwischen der einen oder den mehreren Vorrichtungen zu erleichtern, die verschlüsselten Daten umfassend digitale Signaturen der einen oder der mehreren Vorrichtungen und Software der einen oder der mehreren Vorrichtungen.

2. Datenkommunikationssystem (10) nach Anspruch 1,
**dadurch gekennzeichnet, dass** eine Partei, die für das Übermitteln der SMS über die primäre Kommunikationsanordnung an die gegebene Vorrichtung verantwortlich ist, nicht die gleiche wie eine Partei ist, die die Bestätigung über die sekundäre Kommunikationsanordnung für Zwecke der Überwachung und Rückverfolgbarkeit überträgt.

3. Datenkommunikationssystem (10) nach Anspruch 1,
**dadurch gekennzeichnet, dass** die herkömmliche SMS-Kommunikation in Betrieb über eine Anwendungsprogrammierschnittstelle API oder eine Betriebssystemfunktionalität transcodiert wird, die durch das Datenkommunikationssystem (10) und/oder die gegebene Vorrichtung gehostet wird.

4. Datenkommunikationssystem (10) nach Anspruch 1,
**dadurch gekennzeichnet, dass** die herkömmliche SMS-Kommunikation in Betrieb über die Verwendung einer zentral gespeicherten Datenbank transcodiert ist, wobei die Datenbank darin eine Liste von zugänglichen Telefonnummern gespeichert aufweist, die durch die eine oder die mehreren Softwareanwendungen zum Übermitteln der IP-Datenpakete der transcodierten SMS-Nachricht an die gegebene Vorrichtung erreichbar sind.

5. Datenkommunikationssystem (10) nach Anspruch 3 oder 4,
**dadurch gekennzeichnet, dass** eine Online-Anwendung des Datenkommunikationssystems (10), in Betrieb, die IP-Datenpakete empfängt, die durch Transcodieren der herkömmlichen SMS-Kommunikation erzeugt werden, und die IP-Datenpakete an eine benutzerausgewählte oder Standard-SMS-Anwendung der gegebenen Vorrichtung übermittelt.

6. Datenkommunikationssystem (10) nach Anspruch 1,
**dadurch gekennzeichnet, dass** die gegebene Vorrichtung als eine mobile drahtlose Kommunikationsvorrichtung (30A, 30B) implementiert ist, z. B. ein Smartphone, das einen Hintergrundprozess einsetzt, um eine programmierbare Nachrichtenanwendungsschnittstelle API zu authentifizieren, die als ein Cloud-Dienst in dem Datenkommunikationssystem (10) ausgeführt wird, und wobei die programmierbare Anwendungsschnittstelle, in Betrieb, eine Telefonnummer oder eine Vorrichtungsidentifikation an eine Datenbank zum Speichern darin sendet, wobei die Datenbank innerhalb des Cloud-Dienstes gehostet wird.

7. Datenkommunikationssystem (10) nach Anspruch 6,
**dadurch gekennzeichnet, dass** eine Registrierung der gegebenen Vorrichtung das Installieren einer APP beinhaltet, die eine Vorrichtungsangabe der gegebenen Vorrichtung liest, wobei die Vorrichtungsangabe dann innerhalb des Datenkommunikationssystems (10) unter Verwendung einer Push-Nachricht kommuniziert wird, wobei die Push-Nachricht verwendet wird, um dem Benutzer der gegebenen Vorrichtung zu kommunizieren, dass eine gegebene transcodierte SMS-Nachricht verfügbar ist, wobei die gegebene Vorrichtung die transcodierte SMS-Nachricht über die Verwendung der IP-Datenpakete empfängt und die Bestätigung sendet, dass die transcodierte SMS-Nachricht übermittelt wurde.

8. Datenkommunikationssystem (10) nach Anspruch 7,
**dadurch gekennzeichnet, dass** die APP auch die transcodierte SMS-Nachricht dem Benutzer der gegebenen Vorrichtung anzeigt.

9. Datenkommunikationssystem (10) nach Anspruch 7,
**dadurch gekennzeichnet, dass** die transcodierte SMS-Nachricht durch eine Vielzahl von APP- oder Betriebsschichten der Vorrichtung empfangen wird und bestätigt wird, dass die Übermittlung der transcodierten SMS-Nachricht aufgetreten ist, wenn mindestens eine der Vielzahl von APP- oder Betriebsschichten der Vorrichtung die transcodierte SMS-Nachricht an einen Benutzer der gegebenen Vorrichtung übermittelt hat.

10. Verfahren (100) zum Verwenden eines Datenkommunikationssystems (10), das, in Betrieb, herkömmliche Kurznachrichtendienst-Kommunikationen, SMS-Kommunikationen; über eine primäre Kommunikationsanordnung an eine oder mehrere Vorrichtungen (30A, 30B) sendet (102), wobei das Verfahren einschließt:
(i) Anordnen, dass das Datenkommunikationssystem (10), in Betrieb, eine Datenkommunikation dahindurch unterstützt, die eine sekundäre Kommunikationsanordnung verwendet (104);
(ii) Anordnen, dass eine gegebene Vorrichtung und/oder das Datenkommunikationssystem (10) mindestens eine Signalisierungsschicht unter Verwendung der sekundären Kommunikationsanordnung einschließt, durch die eine Bestätigung eines gegebenen Signalisierungsereignisses kommuniziert wird, dass das Übermitteln einer SMS an die gegebene Vorrichtung über die Verwendung der primären Kommunikationsanordnung erfolgreich ausgeführt wurde, wobei die Bestätigung verwendet wird, um eine Ausführung des gegebenen Signalisierungsereignisses überwachbar und rückverfolgbar zu machen, wobei die sekundäre Kommunikationsanordnung mindestens eines einschließt von: Internetprotokoll TCP/IP, einer Erstausrüster-Kommunikationsschicht, OEM-Kommunikationsschicht; und
(iii) Anordnen, dass das Datenkommunikationssystem (10) betriebsfähig ist, um eine herkömmliche SMS-Kommunikation eines herkömmlichen SMS-Nachrichtenereignisses in Internetprotokoll-Datenpakete, IP-Datenpakete, zu transcodieren, die an die gegebene Vorrichtung übermittelt werden, wobei der Empfang der Internetprotokoll-Datenpakete, IP-Datenpakete, an der gegebenen Vorrichtung bewirkt, dass die gegebene Benutzervorrichtung die Bestätigung als eine Quittung des Empfangs der Internetprotokoll-Pakete, IP-Pakete, sendet, sodass die Ausführung des gegebenen Signalisierungsereignisses überwachbar und rückverfolgbar ist, **dadurch gekennzeichnet, dass** das Transcodieren der herkömmlichen SMS-Nachricht das Ändern einer Sprache und/oder eines Protokolls der herkömmlichen SMS-Nachricht einschließt, wobei die Bestätigung des Empfangs einer transcodierten SMS-Nachricht durch eine Anwendung APP bereitgestellt wird, die in der gegebenen Vorrichtung installiert ist, wobei die Anwendung APP mit einer oder mehreren Anwendungen in Kontakt steht und die eine oder die mehreren Anwendungen zum Senden der transcodierten SMS-Nachricht an die gegebene Vorrichtung abfragt, wobei die Signalisierungsschicht konfiguriert ist, um eine Übersendung der Bestätigung eines gegebenen Signalisierungsereignisses durch Austauschen verschlüsselter Daten zwischen der einen oder den mehreren Vorrichtungen zu erleichtern, die verschlüsselten Daten umfassend digitale Signaturen der einen oder der mehreren Vorrichtungen und Software der einen oder der mehreren Vorrichtungen.

11. Verfahren (100) nach Anspruch 10, **dadurch gekennzeichnet, dass** das Verfahren das Transcodieren der herkömmlichen SMS-Kommunikation in Betrieb über eine Anwendungsprogrammierschnittstelle API oder eine Betriebssystemfunktionalität einschließt, die durch das Datenkommunikationssystem (10) und/oder die gegebene Vorrichtung gehostet wird.

12. Verfahren (100) nach Anspruch 10, **dadurch gekennzeichnet, dass** das Verfahren das Transcodieren der herkömmlichen SMS-Kommunikation in Betrieb über die Verwendung einer zentral gespeicherten Datenbank einschließt, wobei die Datenbank darin eine Liste von zugänglichen Telefonnummern gespeichert aufweist, die durch die eine oder die mehreren Softwareanwendungen zum Übermitteln der IP-Datenpakete der transcodierten SMS-Nachricht an die gegebene Vorrichtung erreichbar sind.

13. Verfahren (100) nach Anspruch 10, 11 oder 12,
**dadurch gekennzeichnet, dass** das Verfahren das Anordnen einschließt, dass eine Online-Anwendung des Datenkommunikationssystems (10), in Betrieb, die IP-Datenpakete empfängt, die durch Transcodieren der herkömmlichen SMS-Kommunikation erzeugt werden, und dass die IP-Datenpakete an eine benutzerausgewählte oder Standard-SMS-Anwendung der gegebenen Vorrichtung übermittelt.

14. Computerprogrammprodukt, umfassend ein nichtflüchtiges computerlesbares Speichermedium, das computerlesbare Anweisungen darauf gespeichert aufweist, wobei die computerlesbaren Anweisungen durch eine computerisierte Vorrichtung ausführbar sind, umfassend Verarbeitungshardware, um ein Verfahren nach einem der Ansprüche 10 bis 13 auszuführen.

## Revendications

1. Système de communication de données (10) qui, lorsqu'il est en fonctionnement, envoie (102)
des communications classiques de service de messagerie courte, SMS, à un ou plusieurs dispositifs (30A, 30B) :
par l'intermédiaire d'un agencement de communication primaire, dans lequel le système de communication de données (10) prend en charge, en fonctionnement, une communication de données à travers celle-ci en utilisant (104) un agencement de communication secondaire ;
un dispositif donné et/ou le système de communication de données (10) comporte au moins une couche de signalisation mise en oeuvre par l'intermédiaire de l'agencement de communication secondaire à travers lequel est communiquée une confirmation d'un événement de signalisation donné délivrant un SMS au dispositif donné par l'intermédiaire d'une utilisation de l'agencement de communication primaire a été exécuté avec succès, dans lequel la confirmation est utilisée pour faire une exécution de l'événement de signalisation donné auditable et traçable, dans lequel l'agencement de communication secondaire comporte : Un protocole Internet TCP/IP, et/ou une couche de communication OEM de Fabricant d'équipement d'origine ; et
le système de communication de données (10) est exploitable pour transcoder une communication SMS classique d'un événement de message SMS classique en paquets de données IP de protocole Internet qui sont délivrés au dispositif donné, dans lequel la réception des paquets de données de protocole Internet IP au niveau du dispositif donné amène le dispositif utilisateur donné à envoyer la confirmation comme accusé de réception de réception des paquets de protocole Internet IP de sorte que l'exécution de l'événement de signalisation donné soit auditable et traçable **caractérisé en ce que** le transcodage du message SMS classique comporte le changement d'une langue et/ou d'un protocole du message SMS classique, dans lequel la confirmation de réception de message SMS transcodé est fournie par une application APP installée dans le dispositif donné, dans lequel l'application APP est en contact avec une ou plusieurs applications et interroge l'une ou plusieurs applications pour envoyer le message SMS transcodé au dispositif donné, dans lequel, la couche de signalisation est configurée pour faciliter une transmission de la confirmation d'un événement de signalisation donné en échangeant des données chiffrées entre le ou les dispositifs, les données chiffrées comprenant des signatures numériques du ou des dispositifs et du logiciel des un ou plusieurs dispositifs.

2. Système de communication de données (10) selon la revendication 1,
**caractérisé en ce que** une partie responsable de la livraison du SMS par l'intermédiaire de l'agencement de communication primaire au dispositif donné n'est pas la même qu'une partie qui transporte la confirmation par l'intermédiaire de l'agencement de communication secondaire pour des fins d'audit et de traçabilité.

3. Système de communication de données (10) selon la revendication 1,
**caractérisé en ce que** la communication SMS classique est transcodée en fonctionnement par l'intermédiaire d'une interface de programmation d'application API ou d'une fonctionnalité de système d'exploitation hébergée par le système de communication de données (10) et/ou le dispositif donné.

4. Système de communication de données (10) selon la revendication 1,
**caractérisé en ce que** la communication SMS classique est transcodée en fonctionnement par l'intermédiaire de l'utilisation d'une base de données stockée centralement, dans laquelle la base de données a stocké dans celle-ci une liste de numéros de téléphone accessibles qui sont joignables par les une ou plusieurs applications logicielles destinées à délivrer les paquets de données IP du message SMS transcodé au dispositif donné.

5. Système de communication de données (10) selon la revendication 3 ou 4, **caractérisé en ce que** une application en ligne du système de communication de données (10), en fonctionnement, reçoit les paquets de données IP générés par transcodage de la communication SMS classique, et délivre les paquets de données IP à une application SMS sélectionnée par utilisateur ou par défaut du dispositif donné.

6. Système de communication de données (10) selon la revendication 1,
**caractérisé en ce que** le dispositif donné est mis en oeuvre en tant que dispositif de communication sans fil mobile (30A, 30B), par exemple un téléphone intelligent qui emploie un processus d'arrière-plan pour authentifier une interface programmable par application de messagerie API s'exécutant en tant que service en nuage dans le système de communication de données (10), et dans lequel l'interface programmable d'application envoie, en fonctionnement, un numéro de téléphone ou une identification de dispositif à une base de données pour l'y stocker, dans lequel la base de données est hébergée dans le service en nuage.

7. Système de communication de données (10) selon la revendication 6,
**caractérisé en ce que** un enregistrement du dispositif donné implique l'installation d'une APP qui lit une indication de dispositif du dispositif donné, l'indication de dispositif étant ensuite communiquée au sein du système de communication de données (10) en utilisant un message push, dans lequel le message push est utilisé pour communiquer à l'utilisateur du dispositif donné qu'un message SMS transcodé donné est disponible, dans lequel le dispositif donné reçoit le message SMS transcodé par l'intermédiaire de l'utilisation des paquets de données IP et envoie la confirmation que le message SMS transcodé a été délivré.

8. Système de communication de données (10) selon la revendication 7, **caractérisé en ce que** l'APP affiche également le message SMS transcodé à l'utilisateur du dispositif donné.

9. Système de communication de données (10) selon la revendication 7,
**caractérisé en ce que** le message SMS transcodé est reçu par une pluralité de couches APP ou de fonctionnement du dispositif, et la livraison du message SMS transcodé est confirmée pour s'être produite lorsqu'au moins une de la pluralité de couches APP ou de fonctionnement du dispositif a livré le message SMS transcodé à un utilisateur du dispositif donné.

10. Procédé (100) d'utilisation d'un système de communication de données (10) qui, en fonctionnement, envoie (102) des communications classiques de service de messagerie courte, SMS, par l'intermédiaire d'un agencement de communication primaire à un ou plusieurs dispositifs (30A, 30B), dans lequel le procédé comporte :
(i) l'agencement pour le système de communication de données (10) pour prendre en charge, en fonctionnement, une communication de données à travers celle-ci en utilisant (104) un agencement de communication secondaire ;
(ii) l'agencement pour un dispositif donné et/ou le système de communication de données (10) pour comporter au moins une couche de signalisation en utilisant l'agencement de communication secondaire à travers lequel est communiqué une confirmation d'un événement de signalisation donné délivrant un SMS au dispositif donné par l'intermédiaire de l'utilisation de l'agencement de communication primaire a été exécuté avec succès, dans lequel la confirmation est utilisée pour réaliser une exécution de l'événement de signalisation donné auditable et traçable, dans lequel l'agencement de communication secondaire comporte : un protocole Internet TCP/IP, et/ou une couche de communication OEM de Fabricant d'équipement d'origine ; et
(iii) l'agencement pour le système de communication de données (10) en vue de transcoder une communication SMS classique d'un événement de message SMS classique en paquets de données IP de protocole Internet qui sont délivrés au dispositif donné, dans lequel la réception des paquets de données de protocole Internet IP au niveau du dispositif donné amène le dispositif utilisateur donné à envoyer la confirmation en tant qu'accusé de réception des paquets de protocole Internet IP de sorte que l'exécution de l'événement de signalisation donné est auditable et traçable et traçable **caractérisé en ce que** le transcodage du message SMS classique comporte le changement d'une langue et/ou d'un protocole du message SMS classique, dans lequel la confirmation de réception de message SMS transcodé est fournie par une application APP installée dans le dispositif donné, dans lequel l'application APP est en contact avec une ou plusieurs applications et interroge la ou les applications pour envoyer le message SMS transcodé au dispositif donné, dans lequel, la couche de signalisation est configurée pour faciliter une transmission de la confirmation d'un événement de signalisation donné en échangeant des données chiffrées entre le ou les dispositifs, les données chiffrées comprenant des signatures numériques du ou des dispositifs et du logiciel des un ou plusieurs dispositifs.

11. Procédé (100) selon la revendication 10, **caractérisé en ce que** le procédé comporte le transcodage de la communication SMS classique en fonctionnement par l'intermédiaire d'une interface de programmation d'application API ou d'une fonctionnalité de système d'exploitation hébergée par le système de communication de données (10) et/ou le dispositif donné.

12. Procédé (100) selon la revendication 10, **caractérisé en ce que** le procédé comporte le transcodage de la communication SMS classique en fonctionnement par l'intermédiaire d'une utilisation d'une base de données stockée centralement, dans lequel la base de données a stocké en son sein une liste de numéros de téléphone accessibles qui sont joignables par la ou les applications logicielles destinées à distribuer les paquets de données IP du message SMS transcodé au dispositif donné.

13. Procédé (100) selon la revendication 10, 11 ou 12, **caractérisé en ce que** le procédé comporte l'agencement pour une application en ligne du système de communication de données (10), en fonctionnement, pour recevoir les paquets de données IP générés par transcodage de la communication SMS classique, et pour délivrer les paquets de données IP à une application SMS sélectionnée par l'utilisateur ou par défaut du dispositif donné.

14. Produit programme informatique comprenant un support de stockage non transitoire lisible par ordinateur sur lequel sont stockées des instructions lisibles par ordinateur, les instructions lisibles par ordinateur étant exécutables par un dispositif informatisé comprenant un matériel de traitement pour exécuter un procédé selon l'une quelconque des revendications 10 à 13.
